# EUROPEAN PATENT APPLICATION

(11) **EP 2 797 241 A1**
(43) Date of publication of application: **29.10.2014**
(21) Application number: 12883553.5
(22) Date of filing: 29.08.2012
(51) Int. Cl.: H04B 7/26, H04W 84/14, H04W 88/04

(54) **MOBILE COMMUNICATION METHOD USING A MOVABLE RELAY STATION**

(71) Applicant: Ivanov, Valeriy Fillipovich, Moscow 111555 (RU); Sokolov, Yuriy Borisovich, Moscow Region 141195 (RU); Fetisov, Vyacheslav Aleksandrovich, Moscow 103001 (RU); Strelnikov, Mikhail Viktorovich, G. Khimki, Moskovskaya oblast 141410 (RU)
(72) Inventor: Ivanov, Valeriy Fillipovich, Moscow 111555 (RU); Sokolov, Yuriy Borisovich, Moscow Region 141195 (RU); Fetisov, Vyacheslav Aleksandrovich, Moscow 103001 (RU); Strelnikov, Mikhail Viktorovich, G. Khimki, Moskovskaya oblast 141410 (RU)
(74) Representative: Jeck, Anton
(86) International application number: PCT/RU2012/000706
(87) International publication number: WO 2014/035278

(57) **Abstract**

The invention is related to the radio communication area, in particular, to the personal radio communication technology and may be used in mobile telephony system. The method of mobile communication using the mobile repeater is implemented by the mobile communication device 1 containing the central processor 11 and the controlling memory 16. This mobile communication device 1 is connected with the base station 6 either by electromagnetic radiation 9 or through the mobile repeater 3 by auxiliary emission 5. In this case, the mobile repeater 3 using to connect with the base station 6 is selected in the central processor 11 in accordance with the selection algorithm previously written into the controlling memory 16.

## Description

### Technical field

The invention is related to the telecommunication field, in particular, to the personal radio communication technology and can be used in mobile telephony systems.

### Previous technology level

Presently, the World Health Organization (WHO) has proven that electromagnetic radiation, emitted by a mobile communication device is dangerous to human health because it increases the risk of cancer (WHO press release No. 208 from May 31, 2011). The known methods of protection from electromagnetic radiation use different shielding elements in the subscriber's head area to reduce the radiation power. Such a mobile communication device is described in the United States Patent No. 5657386, which comes in the shape of a mobile phone, whose radio transmitter unit is fixed on the subscriber's head, while the screen, made of plastic filled with carbon fibers, is installed between the head and this radio transmitter unit. It is obvious that this solution creates additional inconveniences for the subscriber. Another disadvantage of known mobile communication devices is mismatch of their radiation power and the base station radiation power. While having similar receiver sensitivities, the reduced mobile communication device radiation power, in comparison with the base station radiation power level, is often the reason of one-way communication when only the reception is possible from the base station. The main reasons for this are low mobile communication device power and its unfortunate location, such as in an enclosed space.

The most effective way to protect against electromagnetic radiation and at the same time to increase communication reliability is to use such a mobile communication device (mobile phone, Smartphone, etc.) that can interact with a mobile repeater. The known communication method is based on the usage of a mobile repeater, which transmits electromagnetic radiation, encoded with a message, after a corresponding conversion of auxiliary emission, encoded with the message, which was received by the mobile repeater from the mobile communication device (international claim WO 00/18040). The device, implementing this method, includes the mobile communication device that contains a central processor unit and is connected by an auxiliary emission to the mobile repeater, having a processor and an internal memory unit. Using the the mobile repeater allows to reduce the electromagnetic radiation power level down to the values that are safe for a human being as well as to increase communication reliability by positioning the mobile repeater in places with minimal attenuation of electromagnetic radiation. However, the above method and the device cannot be used in the mobile communication system if its base station and a mobile communication device continuously exchange control signals. This is explained by the fact that when the mobile communication device receives control signal from its base station, the responding control signal passes through the mobile repeater with delay that is caused by signal processing and negatively effects the operation of the whole system.

The closest prototype of the claimed invention, as it has similar essential characteristics, which is free from this disadvantage, is another method of mobile communications using a mobile repeater (United States Patent No. 7444116). This method considers that mobile communication devices, which contain a CPU and a controlling memory unit, transmit to the input of a transmitting-receiving base station and receive from it an electromagnetic radiation, encoded in a message. The mobile communication devices exchange control signals with the base station as well. They operate with a mobile repeater with a processor, an internal memory unit and identification numbers. One of these repeaters is connected with the mobile communication device using an auxiliary emission and with the receiving-transmitting base station, using electromagnetic radiation. In this case, to get the specified values of quality estimations for communication between the mobile communication device and the mobile repeater, as well as the specified values of quality estimations for communication between the mobile repeater and the receiving-transmitting base station, you should perform reception and transmission by the mobile repeater of electromagnetic radiation encoded by the corresponding message, as well as reception and transmission by the mobile communication device of auxiliary emission encoded by the corresponding message, while the mobile repeater and the receiving-transmitting base station exchange control signals.

The device, implementing this method, contains the mobile communication device with primary and secondary transceivers connected to the CPU, as well as one or several two-way mobile repeaters, each of which contains the processor, connected by the internal bus to the internal memory and the transceivers, matched with the corresponding primary and secondary transceivers.

This method's drawback is that if several mobile repeaters are used, the issue of their priority is not solved. This decreases efficiency of the mobile repeater, used by the mobile communication device, as this repeater may not be optimal, from the point of view of its interaction, not only with the mobile communication device and the base station, but also directly with the subscriber. This is explained by the fact that the mobile repeater in that prototype is selected based only on the certain threshold values of quality estimations for communication between the mobile communication device and the mobile repeater, as well as for the given threshold values of quality estimations for communication between the mobile repeater and the receiving-transmitting base station. However, when using several mobile repeaters with, for example, different capacity in communication reliability and with different distance to the subscriber, these threshold values of communication quality for all mobile repeaters may be the same, i.e., in this case, the mobile repeater to communicate with the mobile communication device will be turned on at random. This can lead to unnecessarily high human exposure, as well as to less communication stability, in comparison with values that may be provided by the specialized mobile repeater mounted, e.g., in the subscriber's car. The drawback of this method is also related to limitation of its usage due to possibility to use only one type of auxiliary emission that in some cases, for example, inside a small space, may not be optimal from the point of view of both interference immunity and subscriber exposure. One more drawback of the prototype is the lack of a parental control for children who use a mobile communication device without a mobile repeater in the conversation mode or for mobile Internet surfing.

Other disadvantages of well-known mobile communication systems will be listed in the further description. As aforesaid, the purpose of this invention is to eliminate the abovementioned disadvantages.

### Description of the Invention

The main task of this invention is to eliminate random selection of a mobile repeater after the mobile communication device is turned on, as well as in the search mode of a mobile repeater.

According to the invention, the solution to this challenge is that the mobile communication device, which contain a CPU and a controlling memory unit, transmits to the input of a transmitting-receiving base station and receive from it an electromagnetic radiation, encoded in a message. The mobile communication device also exchanges control signals with the base station. In this case, mobile repeaters with a processor, an internal memory unit and identification numbers are used. One of these repeaters is connected with the mobile communication device using auxiliary emission and with the receiving-transmitting base station using electromagnetic radiation. In this case, to get the specified values of quality estimations for communication between the mobile communication device and the mobile repeater, as well as the specified values of quality estimations for communication between the mobile repeater and the receiving-transmitting base station, you should perform reception and transmission by the mobile repeater of electromagnetic radiation, encoded by the corresponding message, as well as reception and transmission by the mobile communication device of auxiliary emission, encoded by the corresponding message. The mobile repeater and the receiving-transmitting base station exchange control signals. In this case, the check number of mobile repeater identifiers is written in the controlling memory of the mobile communication device, and the mobile repeater selection algorithm is written in the controlling memory of the mobile communication device. The identifier of the mobile repeater used to transmit and receive electromagnetic radiation, encoded by the corresponding message, is determined from the check number in the CPU, according to the abovementioned selection algorithm.

The device, implementing this method, contains the mobile communication device with the controlling memory unit and a certain number of primary and secondary transceivers connected to the CPU. Each of these transceivers is matched with corresponding transceivers of the mobile repeater. In addition, the mobile communication device has tools to measure the current distance between the mobile communication device and the mobile repeater.

The advantage of this invention is a deterministic rule to select the mobile repeater that takes into account not only the technical feasibility of the mobile communication device to work with this mobile repeater, but also other parameters, such as the mobile repeater location both indoors and relative to the subscriber. Other special features and advantages of the invention will be clear from the detailed description as well from claims 1-8 of the invention formula.

### Brief Description of Drawing Figures

Further, the invention is explained by the description of specific versions of its implementation and by the accompanying drawings where:
Fig. 1 shows the first version of the structure diagram of the mobile communication system;
Fig. 2 shows the second version of the structure diagram of the mobile communication system;
Fig.3 shows the functional diagram of the mobile communication device and the mobile repeater;
Fig.4 shows the appearance of the mobile communication device and the mobile repeater;
Fig. 5 shows the drawing of tools to measure the current distance between the mobile communication device and the mobile repeater;
Fig. 6 shows the flowchart of the mobile communication device operation algorithm;
Fig. 7 shows the flowchart for the algorithm of the mobile communication device operation algorithm by several auxiliary emissions;
Fig. 8 shows the flowchart of the algorithm for the mobile communication device to turn off the data transmission mode;
Fig. 9 shows the flow chart of the algorithm for the mobile communication device to turn off the data reception mode;

### The Best Options of the Invention Implementation

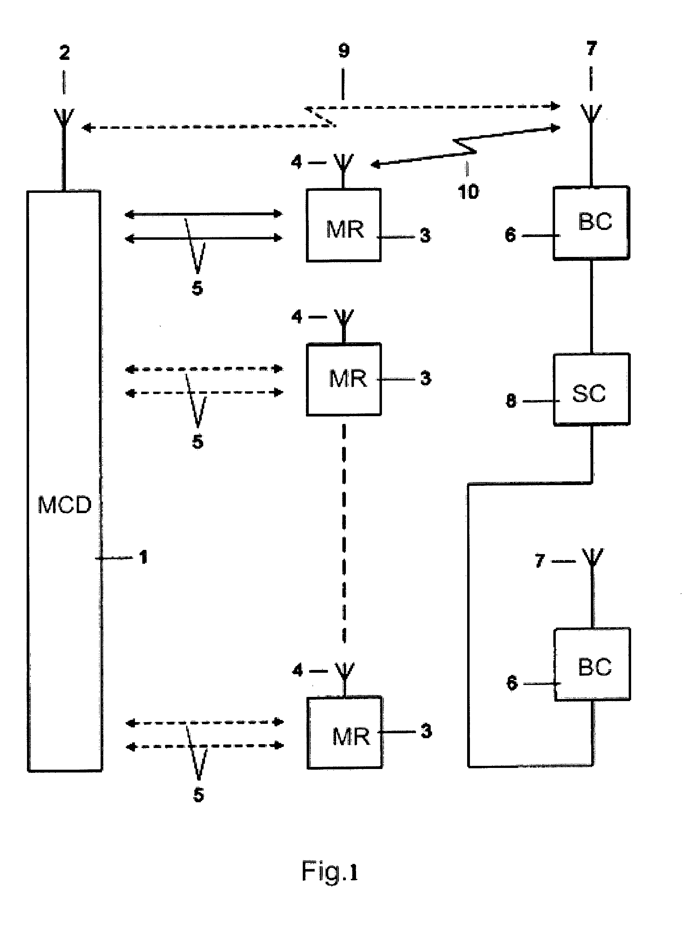

In Fig. 1, the first version of the block diagram of the mobile communication system using a mobile repeater is presented, where the number 1 designates the mobile communication device (MCD), which has the receiving-transmitting antenna (RTA) 2. The number 3 designates n (n = 1, 2 ...) two-way mobile repeaters (MR). The mobile communication device 1 may be implemented as a cell phone, a communicator, a smartphone, etc. Each of MRs 3 has the repeater receiving-transmitting antenna (RRTA) 4, wherein only one of MRs 3 is connected to the MCD 1 through the auxiliary emission (AE), designated with two parallel solid arrows 5. The dashed arrows 5 designate the AE that may be used to connect any other MR to the MCD 1. The mobile communication system also includes receiving-transmitting base stations (BS) 6, each of which has an antenna 7 and is connected to a switching center (SC) 8 of a mobile communication system. The base station 6 is a single-channel or multichannel stationary receiving-transmitting station that is used to organize communications of mobile subscribers in the limited geographical region and is usually located in the center of this region. Depending on context, the term "base station" may be related to the trunking communication system coverage area, to the cell, to the sector inside the cell or to the inside the cell group. Mobile repeater two-way operation mode is caused by their possibility to relay messages both from PSS 1 to BS 6 and from BS 6 to PSS 1. The mobile communication switching center 8 is used in such mobile communication systems as GSM, CDMA, and JDC, and ensures all forms of connections needed for MCD 1 operation. The mobile communication switching center 8 services the base station cell group and provides call routing and control functions. It also performs continuous monitoring for PSS 1, using position registers, movement registers, as well as other specialized devices. Two options to implement communication with another subscriber are used. The first option is implemented using a direct transmission from MCD 1 to the input of receiving-transmitting BS 6 and a direct reception from it by MCD 1 of electromagnetic radiation, encoded by the corresponding message. This radiation is represented in Fig. 1 by the dashed arrow 9. The second communication option is implemented, firstly, using a reception by MCD 1 from MR 3 and a transmission from MCD 1 to MR 3 of that AE 5, encoded by the corresponding message and, secondly, using transmission from MR 3 to the input of the receiving-transmitting BS 6 and reception from it by PR 3 of electromagnetic radiation, encoded by the corresponding message. This electromagnetic radiation is represented by the dashed arrow 10. For the brevity in further description, we will also designate the appropriate communication channel using the corresponding zigzag line or two solid parallel arrows. For example, instead of the phrase "transmission to the input of the receiving-transmitting base station and reception from it of electromagnetic radiation, encoded by the corresponding message, is shown by the zigzag arrow 10" we will write "the message is transmitted and received through the channel 10". In the first option, control signals are exchanged between MCD 1 and the receiving-transmitting BS 6, and in the second option, between MR 3 and the receiving-transmitting BS 6. It may be noted that during implementation of the second communication option, as a rule, a single MR 3 is used only that is connected through AE 5. At the same time, MCD 1 can generally support communication at once with several MR 3s through AE 5.

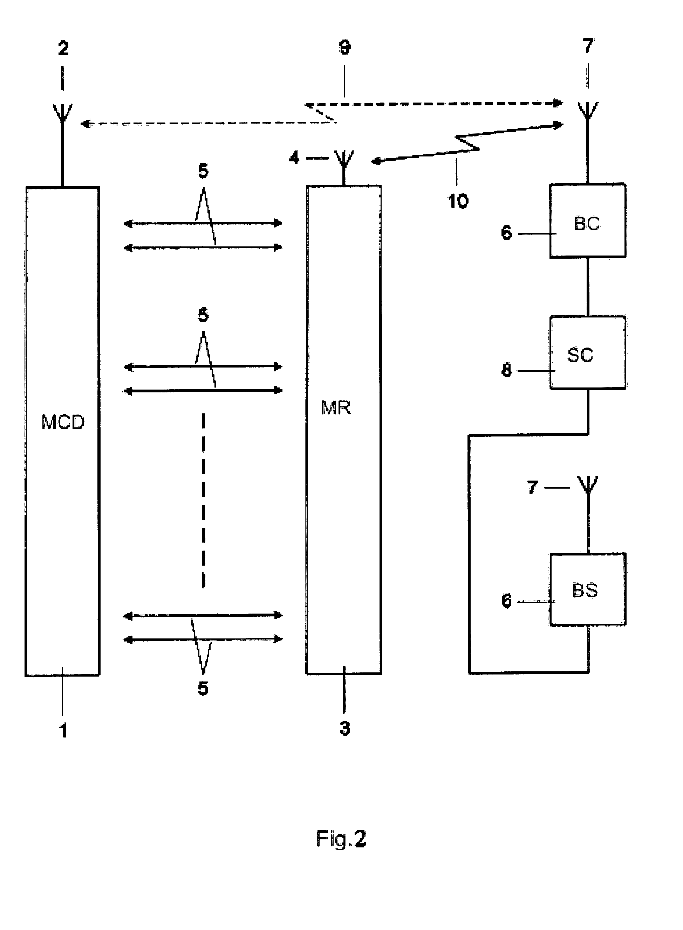

In Fig. 2, the second option of the mobile communication system block diagram is presented with the mobile repeater using only one MR 3 that can connect to MCD 1 through k (k = 1, 2, ...) auxiliary emissions 5. It should be noted that, in general, several AE 5 streams may be used simultaneously for communication between MCD 1 and MR 3, i. e. k >1. In this case each k^{th} auxiliary emission can be generated by MCD 1 and two-way MR 3 as a stream of light, infrared, ultrasonic emission or electromagnetic radiation encoded by the corresponding message. To transmit and receive this stream, MCD 1 PSS can use either the first special antenna (FSA), or RTA 2 to transmit and to receive AE 5, as well as to transmit and to receive electromagnetic radiation 9, encoded by the corresponding message. Similarly, to transmit and to receive AE 5 as electromagnetic radiation stream, MR 3 can use either the second special antenna (SSA), or RRTA 4. In the latter case, it is possible to use a duplex filter, which is a device that separates the reception and transmission bands. It should be noted that at least channels 9 and 10 are physical links (that are, for example, a combination of signal time and frequency multiplexing and are defined as the sequence of radiofrequency channels with the possibility of jumps by frequencies and time slots) and may also include logical control channels. These control channels may be, in particular, control signal transmission channels, shared control channels, individual control channels, a frequency adjustment channel, multiple access channels used by BS 6 and MCD 1 (channel 9) or by BS 6 and two-way MR 3 (channel 10) to exchange control and synchronization signals. All these signals are generated by the base station controller (not shown in the figure) connected with BS 6. As it will be shown below, the simultaneous use of several AE 5 streams allows an optimization of their usage, so each of these streams will be the most effective from the point of view of reliability and quality of data exchange between MCD 1 and MR 3.

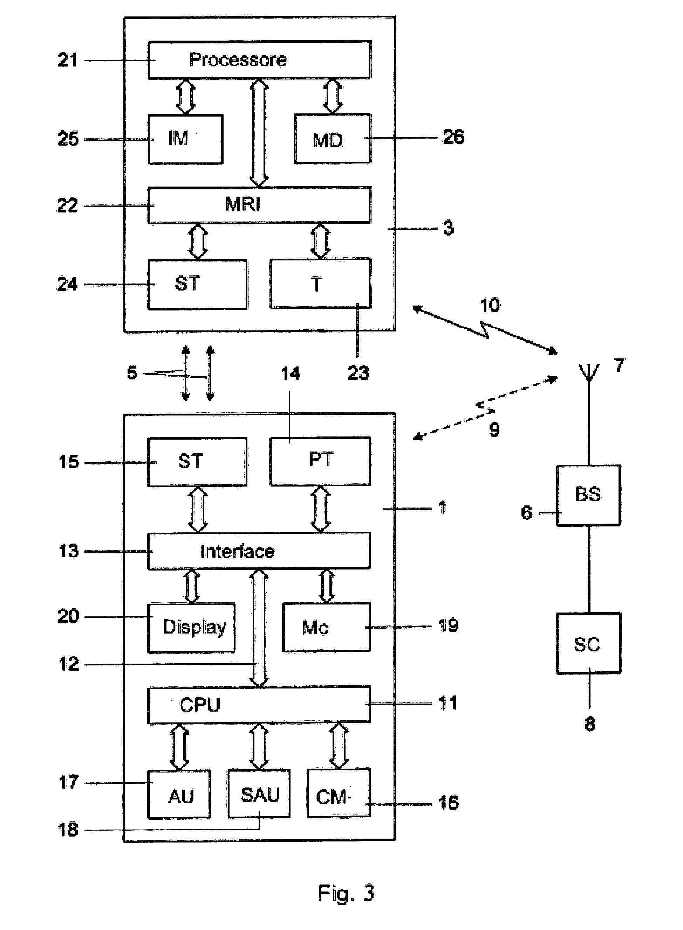

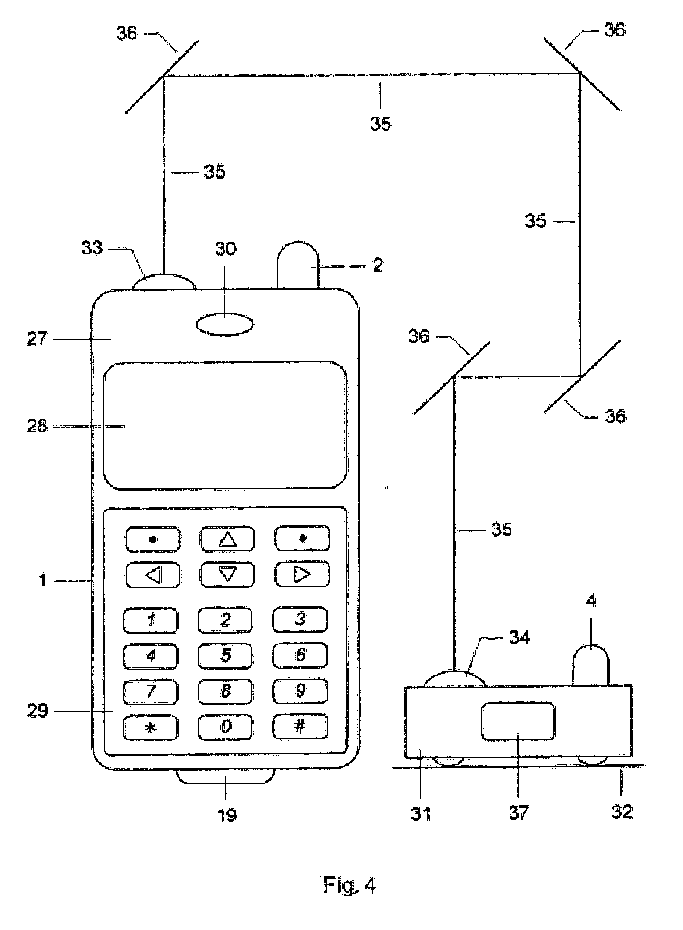

Figure 3 shows functional diagrams of two-way MR 3 and MCD 1 implemented as a mobile phone, communicator or smartphone. The mobile communication device 1 contains the specified number s (s = 1, 2 ...) of primary transceivers (PT) 14 and k secondary transceivers (ST) 15 connected to the CPU 11 through the internal bus 12 and the interface 13. PT 14 and ST 15 contain low-noise input amplifiers and power amplifiers connected, in particular, to RTA 2 through band-pass ceramic filters. In other mobile communication device implementations, ST 15 may be connected to a separate antenna or to a special tool to radiate and receive AE 5. The electromagnetic radiation or the auxiliary emission, which is encoded by the corresponding message, and received by RTA 2, is amplified after the band-pass filter by the low-noise input amplifier and, after the appropriate conversion, enters the central processor 11 input. In the transmission mode, the digital signal that is generated in the central processor 11, as well as in the tools that are part of PT 14 and ST 15 (I/Q generator, phase modulator, mixer, etc.), enter the power amplifier, controlled by the central processor 11. The signal, amplified to the necessary level, comes through the ceramic band-pass filter to RTA 2 and is radiated into the space using electromagnetic radiation, encoded by the corresponding message, or using auxiliary emission, encoded by the corresponding message. The digital logic part of MCD 1 consists of elements connected (directly or through interface 13) to the central processor 11. These elements contain the controlling memory (CM) 16, the subscriber authenticity unit (AU) 17, the second subscriber authenticity unit (SAU) 18, the microphone (Mc) 19 and the display 20. Some other elements of the digital logic part, such as a keyboard, a sonic transmitter, a channel equalizer, a channel coder/decoder are not shown in the figure. The digital logic part performs tasks of demodulation, coding, compression and restoration of the signal, encoded by the corresponding message. This message may be generated by a subscriber using either the keyboard, or the microphone (Mc) 19. The digital logic part outputs the necessary information on the display 20 and also exchanges information with AU 17 and SAU 18 that provide subscriber authentication, coding of transmitted data, as well as control signal exchange between MCD 1 and BS 6. The subscriber authenticity units 17 and 18 contain the identifying information including, in particular, the subscriber number. The second subscriber authenticity unit contains the additional identifying information including, in particular, the second subscriber number. It is possible to note that the mobile communication GSM standard uses special SIM cards as authenticity units. In this case, the above-mentioned exchange of control signals between the tool using the subscriber authenticity unit and the receiving-transmitting base station is performed also utilizing the identifying information, stored in the subscriber authenticity unit. All elements, which are part of MCD 1, are powered from its own battery. The two-way MR 3 contains the processor 21 connected to s transceivers (T) 23 and k secondary transceivers (ST) 24 using its internal bus through the mobile repeater interface (MRI) 22. The functional diagram of T 23 and ST 24 may be similar to the diagram of the above described transceivers, PT 14 and SPT 15 accordingly. The transceiver 23 is a two-way radiotelephone transceiver and ST 24 is a two-way transceiver for AE 5, wherein each of them is matched in its settings with the receiving-transmitting BS 6 and with the appropriate ST 15, accordingly. The abovementioned two-way transceiver operation is caused by the possibility of both to receive and to transmit data. T 23 contains an output unit connected to RRTA 4. ST 24 also contains an output unit that may be connected both to RRTA 4 and to a separate antenna or to a special transmitter of AE 5. The processor 21 is connected to the internal memory (IM) 25 that may store the mobile repeater identifier (ID). In one of implementation options, the monitor display (MD) 26 may be connected to the processor 21. This display may show different service information, for example, the battery charge level (not shown in the figure) for the mobile repeater. If there are several ST 15 and ST 24 matched with each other, it is possible to use the radiation streams that are foundation of well-known communication system standards such as DECT, Wi-Fi, and Bluetooth for AE 5. In other versions of ST 15 and ST 24 implementation, it is possible to use light, infrared or ultrasonic radiation. As an example, appearances of MR 3 containing two (k=2) secondary transceivers 24 and of MCD 1 that contains two secondary transceivers 15 and is implemented as a mobile phone are shown in Fig. 4. The mobile phone contains, in particular, the following elements: a housing 27, a flat screen 28 of the display 20, a keyboard 29, a sonic transmitter 30 and RTA 2. The mobile repeater 3 is designed to operate under the stationary conditions. Its design consists of a rectangular housing 31 installed on a flat surface 32, for example, of a table. One pair of transceivers ST 24 / ST 15 operates using infrared (IR) radiation through the first lens (FL) 33, located on the housing side 27 and through the second lens (SL) 34 on the rectangular housing 31. Infrared light-emitting diodes, installed in focus of FL 33 and in the focus of SL 34, are used as an emitter and a receiver of IR radiation. MCD 1 and MR 3 are connected using the scattered IR radiation, consisting of large number of rays, one of which provides two-way communication for this mutual location of MCD 1 and MR 3. The number 35 in fig. 4 designates one of such rays that is used as AE 5 after reflections from internal surfaces 36 of a room. The second pair of transceivers ST 24 - ST 15 operates with the Bluetooth standard, using two indoor antennas, one of which is located inside the housing 27, while the second one is situated inside the housing 31, on which side the screen 37 of the display 26 is installed. One of advantages of MCD with several AE 5 is the possibility to reduce the auxiliary emission level, when its propagation conditions are satisfactory for this MR 3 location relatively to MCD 1. In addition, IR radiation usage allows an improvement to communication quality due to its higher levels of interference immunity and bandwidth. As it was noted above, in some implementation versions, the described device must contain a tool to measure the current distance L between MSD 1 and MR 3.

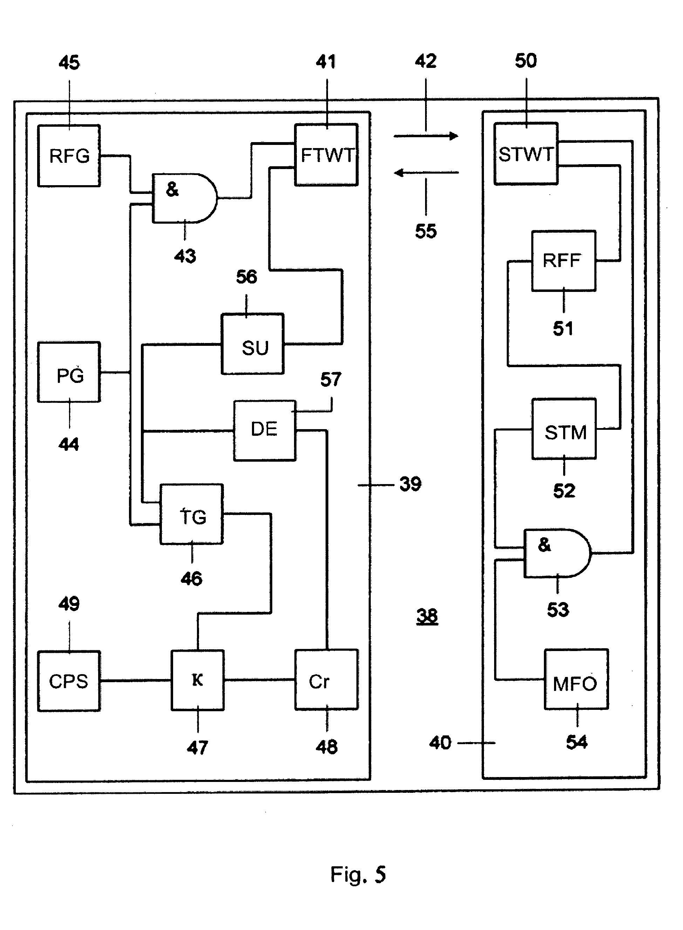

The simplified diagram for one implementation version of this tool is shown in Fig. 5. The tool 38 to measure the current distance between MCD 1 and MR 3 consists of two functional units. The first functional unit (PFU) 39 is located inside MCD 1 and the second functional block (SFU) 40 is located inside PR 3. During the measurement of the distance L, the first two-way transceiver (FTWT) 41 emits a short radio pulse that is shown in Fig. 5 as the arrow 42 and output from the first coincidence circuit 43. The radio pulse is generated by supply to the coincidence circuit 43 inputs, firstly, of the square pulse, issued by the pulse generator (PG) 44 and, secondly, of high-frequency oscillations with the frequency f1, issued by the reference frequency generator (RFG) 45. The square pulse issued by PG 44 also supplies to the trigger (TG) 46, which at the moment to opens the key (K) 47 for the measurement interval t. Before beginning the distance L measurement, the trigger 46 is set in such position that the key 47 is closed. During the measurement interval t = t₁ - to (t₁ is the moment of the key closure), the pulses of the clock-pulse generator (CPG) 49 are passed to the counter (Cr) 48. Reception of a radio pulse radiated by FTWT 41 and also its filtration is performed by the second two-way transceiver (STWT) 50 and by the reference frequency filter (RFF) 51. The filter bandwidth's midband frequency is equal to f₁. Once the radio pulse passes the reference frequency filter (RFF) 51, the single-trip multi-vibrator (STM) 52 is started. A short pulse is output from it. During this pulse, the second coincidence circuit is open that results in the output of a pulse of the high-frequency oscillations f₂ (the reply radio pulse) from the high-frequency oscillator (HFO) 54. Once STWT 50 radiates, the reply radio pulse shown in Fig. 5 as the arrow 55 and FTWT 41 receives it, the signal returning the trigger 46 in its initial state in the moment t₁ is arisen at the shaping unit (SU) 56 output, i.e. the key 47 is closed. Thus, the counter fixes the pulse number p (p = 1, 2...) during the measurement interval t. This number storage duration is specified by the delay of the signal output from the shaping unit 56. This delay is provided by the delay element (DE) 57. The signal from its output resets the counter 48 to its initial (zero) state. It may be noted that that this delay value must be less than the pulse repetition period of RFG 45. From this diagram, we see that the total number of pulses passed during the measurement interval t = t₁ - t₀ is proportional to the distance L. Thus, if during the measurement interval, the counter 48 has registered p of the CPG 49 pulses with the period τ, then the measured distance equals to L = cpτ/2, where c is the velocity of light. The distance L can be calculated by the central processor 11. It should be noted that the tool 38 may be implemented both as a separate device and programmatically. In the last case, elements 43, 44, 45, 46, 47, 48, 49, 56, and 57 are created in the central processor 11, using the corresponding software, the elements 51, 52, 53, and 54 are created in the processor 21, and T 14 and ST 24 are used as FTWT 41 and STWT 50, respectively.

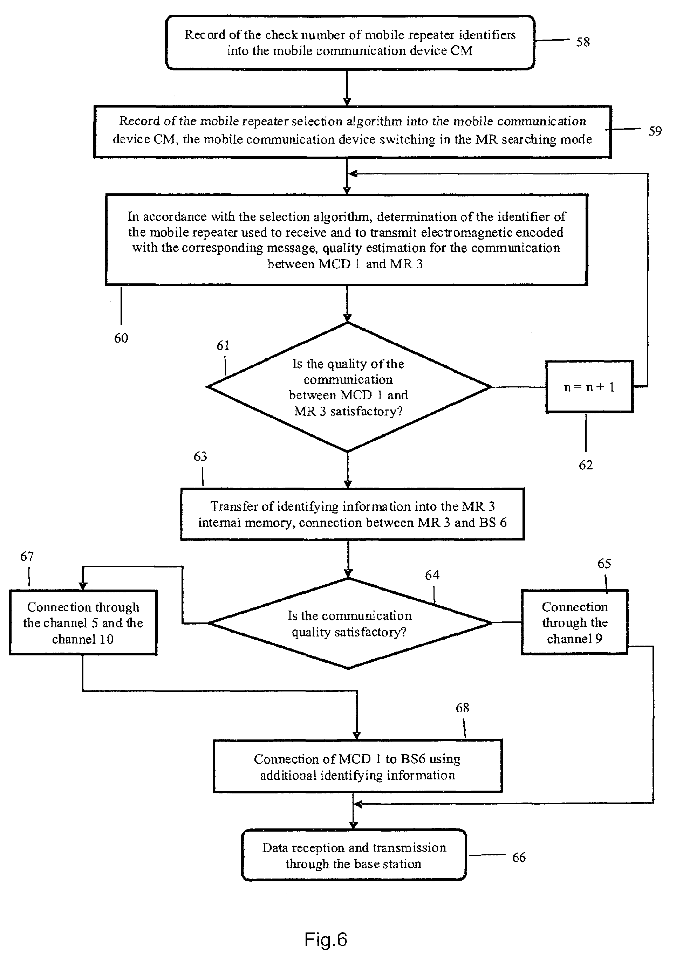

To transmit message in the mobile communication system, the device operates according to the algorithms shown in Fig. 6, Fig. 7, Fig. 8, and Fig. 9. These algorithms are implemented using special software that is stored in the mobile communication system itself, as well as in CM 16 and IM 25. The algorithm operation begins (action 58) from the record into the mobile communication device CM 16 of the check number z (z = 1, 2 ...) of mobile repeater identifiers, as well as from the record into CM 16 of the mobile repeater selection algorithm (action 59). These actions are executed by calling "Menu" on the screen 28 with the keyboard 29 and by menu, opening up to the appropriate menu option, for example, the menu option "Connection with the mobile repeater". Let us assume that after its opening, the menu options "My mobile repeaters" and "Mobile repeater selection algorithm" appear. Once you open the menu option "My mobile repeaters", the records appear that show identifiers of the mobile repeaters that are located in the area of their detection by the mobile communication device, for example, "Identifier: 00 15 83 19 V4 D9"; "Identifier: 00 17 71 21 B1 D2"; or "Identifier: 21 00 51 00 B2 C7". These identifiers may be written into CM 16 either automatically just after their detection, or manually, by pressing the appropriate button of the keyboard 29. The format of the above identifiers is used from the description of the well-known wireless communication Bluetooth standard. Once you open the menu option "Mobile repeater selection algorithm", the menu sub-options appear that show the priority and conditions of MR 3 selection. To navigate between menu options and sub-options, the keyboard 29 buttons are used. The screen 28 may be used too, if it is implemented as a touchscreen. For above three MT 3 let us give versions of menu sub-options after the first opening of the menu option "Mobile repeater selection algorithm":
"ID 00 15 83 19 B4 D9: Connection priority - 00. Minimum distance - 25";
"ID 00 17 71 21 B1 D2: Connection priority - 00. Minimum distance - 25";
"ID 21 00 51 00 B2 C7: Connection priority - 00. Minimum distance - 25";

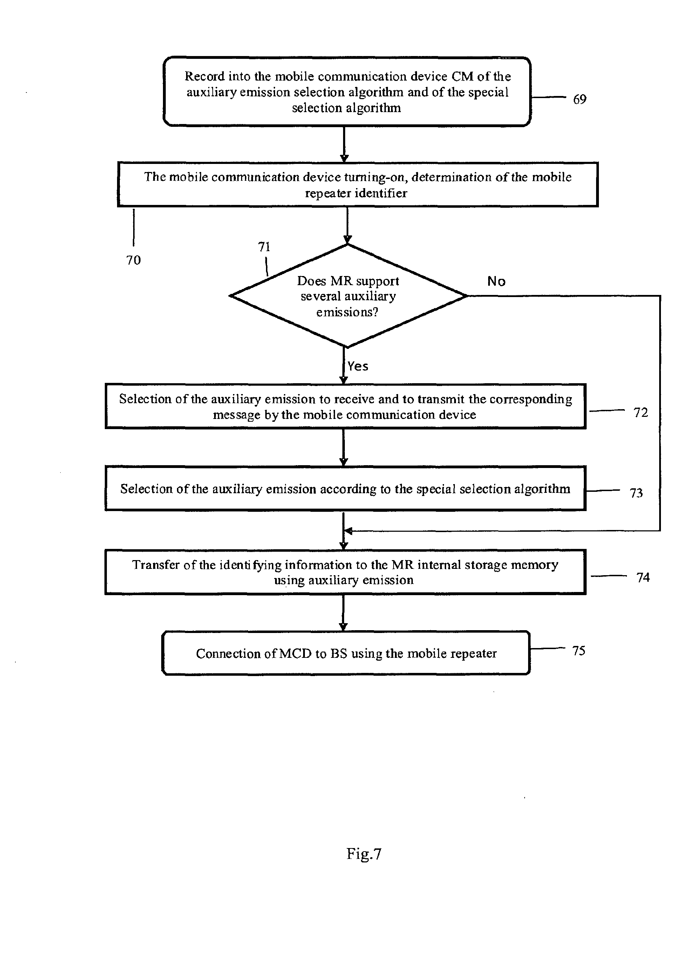

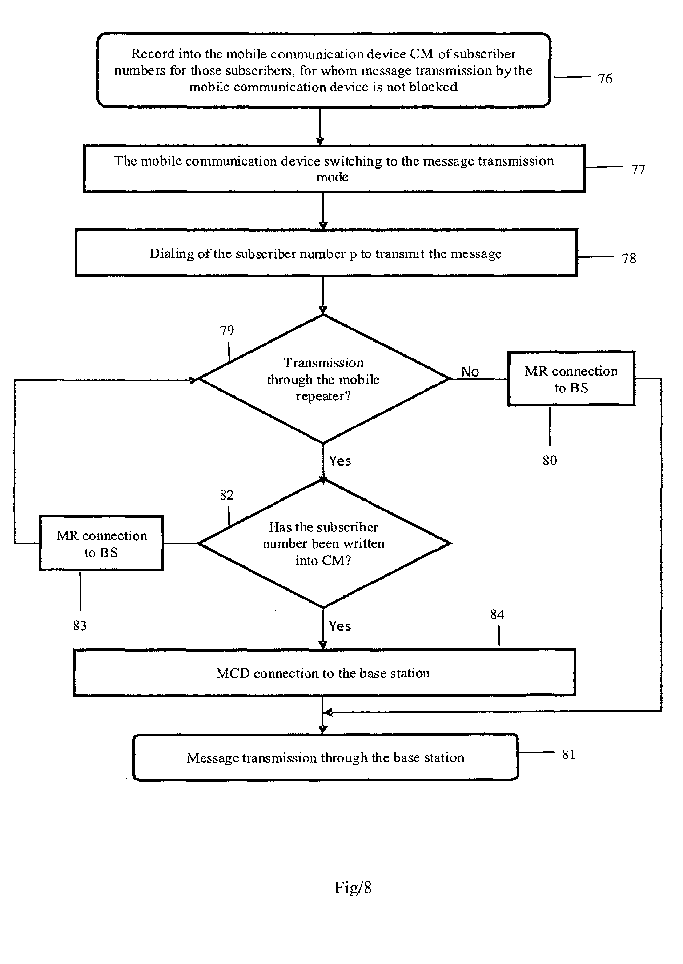

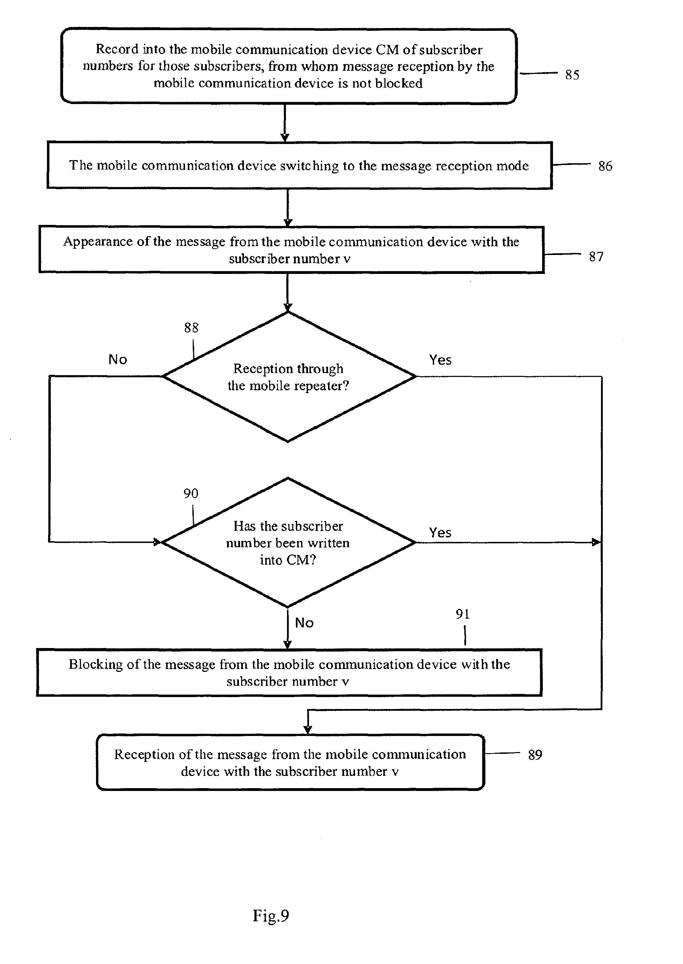

You can see that the mobile repeater selection algorithm uses, besides priority, the minimum distance L measured by the tool 38, utilized to measure the current distance between MCD 1 and MR 3. In this case, the procedure is added to the mobile repeater selection algorithm that excludes those MR 3, whose current distance value L to MCD 1 is lower than the specified minimum value, i.e. (L<I). Such deletion of MR 3 allows parents to train their children to bear MR 3 at the specified distance from themselves, for example, in the briefcase, thus decreasing the radiation that is absorbed in the child body. When the menu option "Mobile repeater selection algorithm" is opened for the first time, the parameters of all menu sub-options are set to default in the initial settings. In this case, the minimum distance that allows communication through MR 3 is expressed in centimeters and the numerical parameter "00" designates that the connection priority is absent, i.e., when n >1 the first PR 3 is used that has been utilized to connect with BS 6. Once the action 59 is executed that is related with MCD 1 turning on or with MCD 1 switching to the MR 3 searching mode, the action 60 is executed that is caused by the fact that in accordance with the selection algorithm the identifier of the n^{th} repeater is determined. This repeater is used to receive and to transmit electromagnetic radiation encoded by the corresponding message. The identifier is determined using generation and transmission of the signal to turn on the n^{th} two-way MR 3 with the specified identifier or to awake it from the standby mode. This signal may be transmitted by ST 15. Once this signal is received by input elements (SSA or RRTA 4), contained in ST 24, and comes to the processor 21 input, the connection with two-way MR 3 is established using AE 5. When the action 60 is being executed, the AE 5 communication quality between MCD 1 and MR 3 is estimated and, if necessary, the two-way MR 3 settings are indicated in the screen 20 of the mobile communication device 1 (the two-way mobile repeater power supply state, location, etc.). The communication quality monitoring as well as transmission of the above settings may be executed by the generation in the mobile repeater 3 of the special signal, which either transmits data about the quality of the signal it received from the mobile communication device through the auxiliary emission channel, or itself is the signal used to estimate the communication quality, but just in the mobile communication device. The signal quality itself is estimated by standard methods using the special software after the signal passed through the analog-to-digital converter that may be included in the central processor 11. The signal level measurement or estimation is a standard function in many mobile communication systems, for example, in the CDMA or GSM mobile telephone system. As a rule, the signal level estimation is made after its detection and signal-to-noise ratio calculation that is integrated for the specified time interval. It should be noted that the signal quality estimation in the simplest case may be reduced to its level measurement. Objective (instrumental) methods make it possible to determine the degree of correlation between the theoretically forecasts and real estimations for the signal-to-noise ratio. For mobile systems, the signal-to-noise ratio corresponding to acceptable quality varies from 15 to 25 db. If the communication quality between the n^{th} mobile repeater and MCD 1 is unsatisfactory ("No" in the condition 61), then the action 62, related to the determination of the identifier of the new (n+1)^{th} mobile repeater that is supposed to be used for reception and transmission of electromagnetic radiation, encoded with the corresponding message. If the communication quality between the n^{th} mobile repeater and MCD 1 is satisfactory ("Yes" in the condition 61), then the action 63 is executed to transmit into IM 25 identifying information and its setting, using the connection between MR 3 and BS 6. If, after this action, the communication quality between MR 3 and BS 6, using the channel 10, is unsatisfactory ("No" in the condition 64), then the action 65 is executed, which is related to the connection between MCD 1 and BS 6, using the channel 9, as well as the action 66, related to the data reception and transmission through BS 6. Moreover, these data include both the corresponding message and control signals, i.e. in this case, MCD 1. containing the central processor 11, and CM 16 transmits to the input of the receiving-transmitting BS 6 and receives from it an electromagnetic radiation encoded by the corresponding message, as well as exchanges control signals between MCD 1 and the receiving-transmitting BS 6. If the communication quality between MR 3 and BS 6 through the channel 10 is satisfactory ("Yes" in the condition 64), then the action 67 is executed, which is related to the connection between MCD 1 and BS 6, using the MR 3 through the channels 5, 10, as well as the action 68, which is related to the connection between MCD 1 and BS 6, using the additional identifying information. It may be noted that action 68 is possible only when MCD 1 has SAU 18. It should be noted that some signals may be considered as common control signals that are presented virtually in all mobile communication systems. It is, in particular, the call control signal sent from BS 6 either at the input of MCD 1 through the channel 9 after execution of the action 65, or at the input of MR 3 through the channel 10 after execution of the action 67. In the first case, MCD 1 receives this signal and transmits it again to the base station. In the second case, the signal is received and transmitted by MR 3. The received returned signal is detected and evaluated by the base station. If the transmission quality (signal-to-noise ratio integrated for the specified time interval) requires it, then BS 6 makes decision to connect to another base station or to disconnect the call. Thus, the action 67 determines, firstly, the ability to transmit and to receive a message (for example, in the form of conversation in the duplex mode) through the channels 5 and 10, and secondly, the ability to transmit and to receive control signals through the channel 10. Accordingly, the action 65 determines the ability to transmit and to receive a message, as well as to transmit and to receive control signals through the channel 9. During the system operation, the communication quality estimates are monitored continuously or periodically both for the channel 9 and for the channels 5 and 10. When the communication quality estimate becomes unsatisfactory for one of these channels ("No" in the condition 61 and 64), then the central processor 11 or the processor 21 generates signals to connect BS 6 directly to MCD 1. Start of the most of the above modes may be indicated in the display 20. Now let us examine the algorithm shown in Fig. 7 for operation of MCD 1 that can connect to MR 3 using k types of auxiliary emission 5. Once the action 69 is executed, which is related to the record of the auxiliary emission selection algorithm and the special selection algorithm into IM 16 of the mobile communication device 1, the action 70 is executed, which is related to MCD 1 turning-on and with determination of the MR 3 identifier. If MR 3 support several types of auxiliary emission ("Yes" in the condition 71), then, firstly, the type of the auxiliary emission (action 72), used to receive and to transmit the corresponding message to MCD 1 is selected, and, secondly, the type of the auxiliary emission (action 73), used to transfer into the MR 3 internal memory the identifying information, stored in AU 17. is selected. In this case the last action is executed using the special selection algorithm that is written in the mobile communication device CM16. Then the identifying information is transferred into the MR 3 internal memory using auxiliary emission (action 74) and is used to connect MCD 1 with BS 6 through the mobile repeater (action 75). The identifying information is used during connection initiation with BS 6 for the following purposes. The call control signal sent from BS 6 to the MCD 1 input through the channel 9, after the action 65 has been executed, contains information about the called MCD 1 subscriber's number. The subscriber number, contained in the call signal, must coincide with the subscriber's number stored in MCD 1. The last number is contained in the identifying information, stored in the subscriber's authenticity unit 17. If the call control signal, after the action 67 has been executed, is received by MR 3, then the information about the subscriber's number is contained in the identifying information written in IM 25 through its transfer, using auxiliary emission from the mobile communication device 1. In this case, the electromagnetic radiation encoded by the corresponding message is transmitted to MR 3 and is received from it, using the identifying information written in the internal memory 25. As in the preceding case, the action 69 may be executed using the "Menu" that may contain the menu options "Auxiliary emission selection algorithm" and "Special selection algorithm". Once the menu option "Auxiliary emission selection algorithm" is opened, the menu sub-options appear that show the list of auxiliary emission streams that may be used to exchange auxiliary emission, encoded by the corresponding message with MR 3. Once this list is opened, the priority for these streams can be selected. Once the menu option "Special selection algorithm" is opened, the menu sub-options appear that show the list of auxiliary emission streams that may be used to transmit the identifying information to MR 3, as well as to select priority of these streams. The following additional functions or elements may be implemented in some mobile communication devices to improve service and operating characteristics: automatic signaling by the mobile repeater (to determine the mobile repeater location), using sound or light signals if the mobile communication device is far from the mobile repeater; automatic signaling by the mobile communication device, using sound or light signals if the mobile communication device is far from the mobile repeater; indication of the pointer to the mobile repeater location; installation on the mobile repeater of the directed antenna 4 with its automatic guidance system. Another important service function described in this invention is the MCD 1, blocking in such a way that it can transmit and receive data without MR 3 only for those subscriber numbers that are written in the mobile communication device CM 16. This function, whose operation algorithm is shown in Fig. 8 and Fig. 9, may be used, for example, by parents of those children, who disregard the mobile repeater. Using this function, the parents can always connect to their child whether the mobile repeater is turned on or not.

In Fig. 8, the algorithm of MCD 1 blocking is shown that allows MCD 1 to transmit data without MR 3 only for those subscriber numbers that are written in the mobile communication device CM. The algorithm operation beginning is described by the action 76, caused by the record into the mobile communication device CM of numbers of those subscribers, for whom the transmission by the mobile communication device is not blocked, i.e., these are the priority outgoing subscriber numbers that are written into the mobile communication device CM 16. If, after the mobile communication device has been switched (action 77) to the mode of message transmission and the subscriber number p (p≥0) has been dialed, in accordance with the action 78, the transmission is performed through the mobile repeater ("Yes" in the condition 79), then, once MR 3 connects with BS 6 (action 80), the action 81 is executed, which is related to the message transmission to the mobile communication device with the subscriber number p. If, once the mobile communication device is turned on and the subscriber number p is dialed, MR 3 is not found or is absent ("No" in the condition 79), then the dialed subscriber number p is searched in CM 16 among those subscriber numbers, for which the mobile communication device transmission is not blocked. If the search result is negative ("No" in the condition 82), the connection with the mobile communication device, having the subscriber number p is blocked (action 83). Thus, the transmission by MCD 1 of the electromagnetic radiation encoded by the corresponding message is blocked for those outgoing subscriber numbers that coincide with the priority outgoing subscriber numbers.

If the search result is positive ("Yes" in the condition 82), then the action 84 is executed to connect MCD 1 with BS 6 and action 81 is executed, related to the message transmission to the mobile communication device with the subscriber number p.

In Fig. 8, the algorithm of MCD 1 blocking is shown that allows MCD 1 to receive data without MR 3 only from those subscriber numbers that are written in the mobile communication device CM. The algorithm operation beginning is described by the action 85, caused by the record into the mobile communication device CM of those subscribers numbers, for whom the reception by the mobile communication device is not blocked, i.e., these are the priority outgoing subscriber numbers that are written into the mobile communication device CM 16. If, after the mobile communication device has been switched (action 86) to the mode of message reception and the message (action 87) from the mobile communication device with the subscriber number v (v≥0) appeared, and the reception is performed through the mobile repeater ("Yes" in the condition 88), then the action 89 is executed, which is related to the message reception from the mobile communication device with the subscriber number v. If MR 3 is not found or is absent ("No" in the condition 88), then the subscriber number v is searched in CM 16 among those subscriber numbers, for which the mobile communication device reception is not blocked. If the search result is negative ("No" in the condition 90), the message from the mobile communication device with the subscriber number v is blocked (action 91). In other words, the reception by MCD 1 of the electromagnetic radiation, encoded by the corresponding message, is blocked for those incoming subscriber numbers that coincide with the priority incoming subscriber numbers. If the search result is positive ("Yes" in the condition 90), then the action 89 is executed, which is related to the message reception from the mobile communication device having the subscriber number v. Now let us give the particular example to illustrate operation of MCD 1, which CM 16 stores three (z = 3) MR 3 of above-mentioned identifiers. In addition, this MCD 1 operates, using the GSM mobile communication system standard, and uses as AE 5 only one (k =1) type of auxiliary emission used in the Bluetooth wireless communication standard. The GSM standard uses, as AU 17, a special SIM card that contains the identifying information including, in particular, the subscriber number. From other MCD 1 parameters described in this example, it is possible to note absence of SAU 18. Let us suppose that one of three MR 3 is stationary (ID: 00 17 71 21 B1 D2), but the other two MR 3 are in a car (ID: 00 15 83 19 B4 D9) in a subscriber's briefcase (ID: 21 00 51 00 B2 C7). Since the stationary MR 3, with fine tuning for BS 6 and mobile repeater, installed in the car, operate better than the mobile repeater in the briefcase, the subscriber has set (action 59) in the MCD 1 "Menu" the following parameters:
"ID 00 15 83 19 B4 D9: Connection priority - 02. Minimum distance - 25";
"ID 00 17 71 21 B1 D2: Connection priority - 01. Minimum distance - 34";
"ID 21 00 51 00 B2 C7: Connection priority - 03. Minimum distance - 47".

Let us assume that subscriber having in his briefcase the mobile repeater with ID 21 00 51 00 B2 C7 steps into the car with the built-in mobile repeater. If the briefcase MR was in the mode of communication with MCD 1 and in the mode of communication with BS 6, then, when MCD 1 finds the car mobile repeater with ID 00 17 71 21 B1 D2 not further than 34 cm, MR 3 with ID 21 00 51 00 B2 C7 turns off and MR 3 ID 00 17 71 21 B1 D2 turns on. After, firstly, connection with it through AE 5 (action 60) and, secondly, the communication reliability verification ("Yes" in the condition 61), the identifying information is transferred to IM 25 (action 63) by its readout from the SIM card and the MCD connects to the BS through the channels 5 and 10 (action 67). After the transfer of the identifying information into IM 25, all control signals sent from BS 6 are received by MR 3. In particular, the incoming call is connected, using the control signal from the BS, containing the MCD 1 subscriber number. This number, extracted in MR 3 from the control signal, is compared in the processor 21 with the subscriber number, read from the SIM card, and stored in IM 25. If these numbers are the same, the MR sends to SC 8 through BS 6 a confirmation message, containing the MCD 1 subscriber number. Having accepted this message, the switching center 8 analyzes the incoming information, determines the number of BS 6 servicing at this moment the called subscriber, and, thus, locates the subscriber position. It may be noted that the MCD 1 and MR 3 cooperation, described in this example, is possible due to the usage of different special profiles of the Bluetooth standard. So, the profile SAP is used to read the identifying information from the SIM card into PR 3. It may be noted too that other data of the identifying information is also read from the SIM card, when this profile is used. For example, A3 is the authentication algorithm, utilized to calculate, by the processor 21, the response value from the random number received by T 23 from BS 6 or Kc, is an encryption key, used to encrypt/decrypt control signals. To organize a conversation between MCD 1 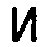 MR 3, using AE 5, the profiles HFP and HSP are applied. To transfer to MR 3 data that was input, using the keypad 29, the profile GOEP may be used. Thus, if the mobile subscriber "lifts handset" to start the outgoing calls, he dials the number using the keyboard 29, and this number is copied to IM 25 through AE 5.

### Industrial Applicability

This invention may be used in the following communication areas: mobile telephone communication of all known standards; the trunking radiotelephonic communication system; and personal radio communication stations. This invention may be widely applied also in those public places, where people, using mobile telephone communication may be present. The multichannel mobile repeaters, containing several transceivers, may be installed in these places. Thus, these repeaters become stationary ones. Once the public places are fitted with installed stationary repeaters that may operate as mobile repeaters described in this invention, the subscriber, who happened to be in this place must have a mobile communication device that can recognize mobile repeater presence and automatically switch to the mode of auxiliary emission usage. The automatic switching mode, as it follows from above, must be previously registered in the mobile communication device menu. Thus, a user having the cell phone, described in this invention, even without the mobile repeater, can, firstly, reduce exposure of harmful electromagnetic radiation on his brain, eyes and other body organs and, secondly, improve reliability and quality of communication. The quality improvement is explained by the fact that the mobile repeater can be installed in advance in those places, where quality of communication with the base station is the best. Improvements of communication reliability and quality, as well as reduction of human eye irradiation, are especially urgent for the mobile Internet. This is related, first of all, with such factors, as the maximum radiation power of the mobile communication device, operating in the mobile Internet mode, as well as bigger duration of human operation in this mode, in comparison with a simple conversation.

## Claims

1. The method of mobile communication, using the mobile repeater, consisting in that the mobile communication device (1), containing the central processor (11), and the control memory (16) is used to transmit (66) to the receiving-transmitting base station (6) input and to receive (66) from it electromagnetic radiation encoded by the corresponding message, to exchange (66) control signals between the mobile communication device (1) and the receiving-transmitting base station (6), wherein the mobile repeaters (3) with the processor (21), internal memory (25) and identifiers are used, and one of these mobile repeaters is connected with the mobile communication device (1) through auxiliary emission and with the receiving-transmitting base station (6) through electromagnetic radiation. In this case, to get the specified values of quality estimates for communication between the mobile communication device (1) and the mobile repeater (3), as well as to get the specified values of quality estimates for communication between the mobile repeater (3), and the receiving-transmitting base station (6), electromagnetic radiation encoded by the corresponding message is transmitted and received by the mobile repeater (3) and auxiliary emission encoded by the corresponding message is transmitted and received by the mobile communication device (1), where the mobile repeater (3) and the receiving-transmitting base station (6) exchange control signals. This method is **characterized by** the mobile repeater (3) identifier check number, written (58) into the control memory (16) of the mobile communication device (1), the mobile repeater (3) selection algorithm is written (59) into the control memory (16) of the mobile communication device (1), while the mobile repeater (3) identifier that is used (67) to receive and transmit electromagnetic radiation encoded by the corresponding message is determined (61) from the check number in the CPU (11), according to the abovementioned selection algorithm.

2. The method according to claim 1, **characterized in that** the tool (38) is used to measure the current distance between the mobile communication device (1) and the mobile repeater (3), the minimum value of the distance between the mobile communication device (1) and the mobile repeater (3) is set (59), while the action to exclude those mobile repeaters (3), for which the current distance value to the mobile communication device (1) is less than the set minimum value, is added (59) in the selection algorithm.

3. The method according to claim 1, **characterized in that** at least one mobile repeater (3) can connect to the mobile communication device (1) using several types of auxiliary emission, while the auxiliary emission used to receive and to transmit the corresponding message by the mobile communication device (1) is selected (72) in accordance to the auxiliary emission selection algorithm written (69) in the control memory (16) of the mobile communication device (1).

4. The method according to claim 1, **characterized in that** in the mobile communication device (1), the subscriber authenticity unit (17) is used that is connected to the central processor (11) and contains the identifying information including, in particular, the mobile communication device (1) subscriber number, while the identifying information after its extraction (70) from the mobile repeater (3) identifier check number is written into its internal memory (25), using this identifying information transmission (74) through auxiliary emission from the mobile communication device (1). In this case, the electromagnetic radiation encoded by the corresponding message is received and transmitted by the mobile repeater (3) using the identifying information written in the internal memory (25).

5. The method according to claim 4, **characterized in that** at least one mobile repeater (3) can connect to the mobile communication device (1) using several types of auxiliary emission, while the auxiliary emission used to transmit (74) the identifying information into the mobile repeater (3) internal memory is selected (73) in accordance to the special selection algorithm written in the control memory (16) of the mobile communication device (1).

6. The method according to claim 1, **characterized in that** the second authenticity unit (18), which is connected to the central processor (11) and contains the additional identifying information including, in particular, the second subscriber number, is used in the mobile communication device (1), while after connection with the receiving-transmitting base station (6) through the mobile repeater (3) the electromagnetic radiation encoded by the corresponding message is received and transmitted as well as control signals are exchanged between the mobile communication device (1) and the receiving-transmitting base station (6) using the additional identifying information for these actions.

7. The method according to claims 1-6, characterized that the priority outgoing subscriber numbers are written (76) into controlling memory (16) of the mobile communication device (1); in this case transmission of electromagnetic radiation encoded by the corresponding message by the mobile communication device (1) is blocked (83) for the those outgoing subscriber numbers that do not coincide with the priority outgoing user numbers.

8. The method according to claims 1-6, characterized that the priority outgoing subscriber numbers are written (85) into controlling memory (16) of the mobile communication device (1); in this case transmission of electromagnetic radiation encoded by the corresponding message by the mobile communication device (1) is blocked (91) for the those incoming subscriber numbers that do not coincide with the priority incoming user numbers.
